# EUROPÄISCHE PATENTSCHRIFT

(11) **EP 0 970 577 B1**
(45) Veröffentlichungstag und Bekanntmachung des Hinweises auf die Patenterteilung: **25.07.2001**
(21) Anmeldenummer: 98916950.3
(22) Anmeldetag: 13.03.1998
(51) Int. Cl.: H04N 5/00, H04N 7/52, H04N 7/16

(54) **VERFAHREN UND VORRICHTUNG ZUR DATENÜBERTRAGUNG**
DATA-TRANSMISSION METHOD AND DEVICE
PROCEDE ET DISPOSITIF POUR LA TRANSMISSION DE DONNEES

(30) Priorität: 17.03.1997 DE 19710972
(43) Veröffentlichungstag der Anmeldung: 12.01.2000
(73) Patentinhaber: Kretzschmar, Ulrich, 14471 Potsdam (DE)
(72) Erfinder: KRETZSCHMAR, Ulrich, D-14471 Potsdam (DE); WULFKEN, Harald, D-85731 Ismaning (DE)
(74) Vertreter: Hertz, Oliver, Dr.
(86) Internationale Anmeldenummer: EP9801488
(87) Internationale Veröffentlichungsnummer: WO9842124

(56) Entgegenhaltungen:
- EP-A- 0 716 546
- EP-A- 0 735 776
- WO-A-95/29560
- US-A- 5 517 502
- ISO/IEC CD13818-1 (MPEG 2 PART 1): "PROGRAM SPECIFIC INFORMATION" INFORMATION TECHNOLOGY - GENERIC CODING OF MOVING PICTURES AND ASSOCIATED AUDIO INFORMATION, PART 1: SYSTEMS. DRAFT INTERNATIONAL STANDARD ISO/IEC DIS 13818-1, 1994, Seiten 36-45, 106 - 109, 112/113, XP002060689 INTERNATIONALE DE NORMALISATION

## Beschreibung

Die Erfindung betrifft ein Verfahren zur Datenübertragung, insbesondere zur Datenübertragung mit bedingtem Zugriff durch den Empfänger (im folgenden: "Conditional Access" oder "CA") über eine Satellitenübertragungsstrecke zu mindestens einem Empfänger. Die Erfindung betrifft ferner ein Verfahren zum Aufbau eines Datenstroms mit Containerstruktur. Die Erfindung betrifft auch Vorrichtungen zur Implementierung derartiger Verfahren.

Zur Übertragung von Informationen (z.B. Bildinformationen, Toninformationen oder andere Daten) von einem Informationsanbieter zu einer Vielzahl von Empfängern werden zunehmend digitale Übertragungskanäle verwendet, in denen die Informationen als digitale Signale übertragen werden. Die Übertragungskanäle werden entweder durch drahtlose Funkverbindungen oder durch Leitungsverbindungen gebildet. Die Funkverbindungen (z.B. Satellitenübertragung) werden bisher lediglich für bestimmte Anwendungen wie beispielsweise die digitale Fernsehübertragung oder die digitale Telefongesprächsübertragung benutzt. Es besteht zwar die Möglichkeit, parallel zur Fernsehübertragung z.B. in einem Satellitenkanal Zusatzdaten zu übermitteln. Hierfür steht jedoch nur die Austastlücke bei der Bildübertragung zur Verfügung, so daß lediglich relativ geringe Datenmengen pro Zeiteinheit übertragen werden können.

Für die Übertragung beliebiger Daten, die nicht auf bestimmte Formate beschränkt sind, insbesondere über Leitungsverbindungen wurden bestimmte Techniken zur Datenorganisation (Paketbildung) und -codierung (Kompression) entwickelt. Dennoch besteht auch bei Leitungsverbindungen der Nachteil beschränkter Übertragungskapazitäten, da Leitungsverbindungen im Vergleich zu Funkverbindungen eine relativ geringere Bandbreite besitzen.

Gegenwärtig ist keine Datenübertragungstechnik verfügbar, mit der große Datenmengen beliebigen Formats mit Übertragungsraten beispielweise oberhalb 500 kBit s⁻¹ effektiv empfangbar sind. Zur Lösung dieses Problems ist insbesondere die digitale Fernsehübertragungstechnik nicht einfach durch Anwendung auf beliebige Datenformate einsetzbar. Dies hat die folgenden Gründe.

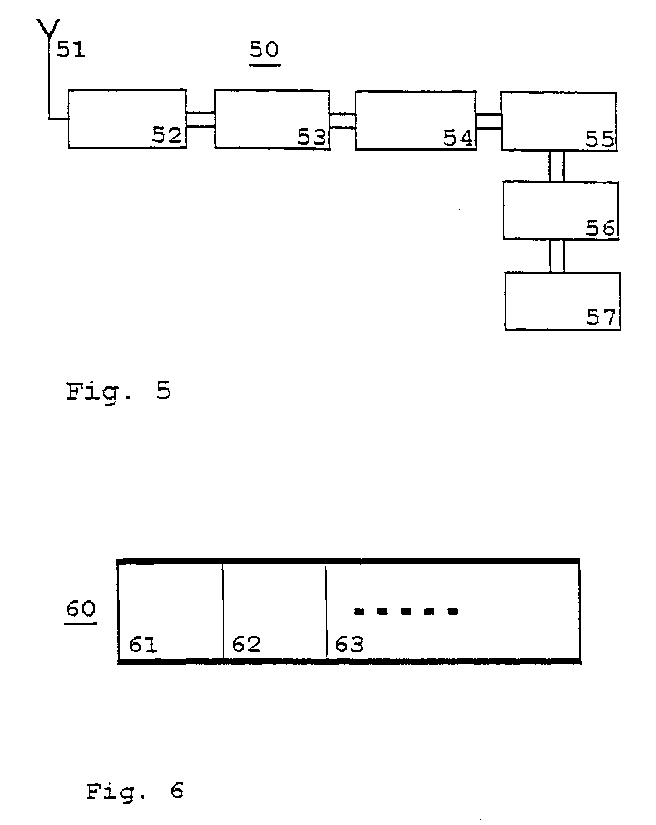

Die digitale Fernsehübertragung (insbesondere über Satellitenstrecken) erfolgt mit der DVB-Technik (DVB: Digital Video Broadcasting). Die Video- und Audio-Signale werden einer Quellencodierung, einer Kanalcodierung und gegebenenfalls einer kryptographischen Codierung unterzogen. Die Quellencodierung umfaßt eine Umsetzung der Bild- und Toninformation in digitale Signale, wobei zur Datenreduktion standardisierte Kompressionstechniken verwendet werden. Die Kanalcodierung dient der Reduktion von Übertragungsfehlern in den realen Übertragungskanälen. Die kryptographische Codierung wird insbesondere zur Realisierung bedingten Empfangs (Pay-TV) verwendet. Die nach der Quellencodierung (z. B. nach dem MPEG-Standard) anfallenden Datenmengen werden im Multiplexverfahren in Form sogenannter Daten-Container übertragen. Beim sogenannten Transportmultiplex werden Daten-Container, die sich auf bestimmte Informationsquellen beziehen, in einer bestimmten Reihenfolge verschickt. Die Informationsquellen können beispielsweise Videoinformationen von verschiedenen Kamerapositionen, die Toninformation und Zusatzdaten umfassen. Mit einem in Fig. 5 schematisch skizzierten Empfängersystem werden die Daten-Container, deren Aufbau unten unter Bezug auf Fig. 6 beschrieben wird, empfangen und verarbeitet.

Das Empfängersystem 50 gemäß Fig. 5 enthält eine Empfangsantenne 51, einen Tuner 52, einen ZF-Verstärker 53, einen Demodulator 54, einen Demultiplexer 55, einen MPEG-Decodierer 56 und einen Anschluß an die Videoeinrichtung 57. Die Komponenten 51 bis 54 dienen dem Empfang der primären Funksignale und der Demodulation. Im Demultiplexer 55 wird die Verteilung der Daten-Container aus den verschiedenen Informationsquellen in einem Datenstrom rückgängig gemacht, so daß im MPEG-Decodierer 56 für jede Informationsquelle die Daten-Dekompression vorgenommen werden kann.

Ein Daten-Container 60 (s. Fig. 6) umfaßt einen Header 61, der mit einem Sync-Byte den Anfang des Containers signalisiert und mit der sogenannten Packet-ID eine Mitteilung enthält, welche Nutzdatenart (Pay-Load) der Container enthält. Ein optionaler Zusatz-Header 62 beinhaltet das "Adaptation Field", in das u.a. die Zeitreferenz integriert ist. Anschließend folgen die Nutzdaten 63. Die Gesamtlänge eines Containers beträgt 188 Byte, wobei 4 Byte auf den Header 61 fallen.

Die nach der Verarbeitung im MPEG-Decodierer 56 vorliegenden Daten tragen gegebenenfalls eine kryptographische Verschlüsselung, die nur durch die Fernsehzuschauer aufgehoben werden kann, die nach Zahlung einer Gebühr über das entsprechende Entschlüsselungsverfahren verfügen (Pay-TV). Zur Realisierung der "Conditional Access"-Technik werden die primären Bilddaten zweistufig verschlüsselt (Scrambling). Der Header des jeweiligen Daten-Containers enthält in diesem Fall Kontrollbits, mit denen mitgeteilt wird, ob der folgende Block verschlüsselt ist. Die Entschlüsselung ("Descrambling") erfolgt im Endgerät unter Verwendung von gesondert zugeteilten Decodierungsworten.

Es besteht ein Interesse daran, nicht nur Video- und Tondaten zu übertragen, sondern auch andere Datenformate wie z. B. Textdaten oder Binärdaten zu versenden. Aufgrund der skizzierten Gesichtspunkte der DVB-Technik wäre jedoch eine Anwendung zur Übertragung beliebiger Datenformate aus den folgenden Gründen umständlich und ineffizient. Erstens würde der Einsatz der Multiplex-Demultiplex-Technik zu einem hohen Verarbeitungsaufwand führen, der im Ergebnis nutzlos ist, da eine Trennung bestimmter Datentypen (etwa nach Video- oder Ton-Daten) nicht stattfinden muß. Ferner würden die Daten-Container Informationen enthalten, die für die Übertragung allgemeiner Datenformate bedeutungslos sind. Hierzu zählt beispielsweise die Zeitreferenzinformation oder Informationen zur Identifizierung der Datenart. Bei allgemeinen Datenformaten ist ferner keine Bindung an bestimmte Bildsignale erforderlich. Die für MPEG-Komprimierung vorgesehene redundante Information würde somit zu einer unnötigen Einschränkung der Übertragungskapazität führen. Weiterhin ist es nicht sinnvoll, die Kompressionsstandards zur Bildsignalverarbeitung (z. B. MPEG) allgemein zu verwenden, da dies in der Regel nicht zu einer optimalen Kompression oder sogar zu keiner Kompression führt. Es müßte also anstelle des MPEG-Decodierers 56 (Fig. 5) eine Decodiereinheit vorgesehen werden, die verschiedene, jeweils optimale auf der Senderseite eingeführte Daten-Kompressionen rückgängig machen kann. Andererseits kann es gerade unerwünscht sein, nach Empfang beliebiger Datenformate diese sofort zu dekomprimieren, z. B. falls zunächst eine Weitersendung in einem Leitungsnetz oder eine Zwischenspeicherung beabsichtigt ist. Schließlich ist die bekannte "Conditional Access"-Technik zum selektiven empfängerspezifischen Datenempfang ungeeignet, da die Zugangsberechtigung des Empfängers und das entsprechende Descrambling erst erfolgt, nachdem die Daten vollständig empfangen und in den Einheiten 55 und 56 verarbeitet wurden, was bei größeren zu verarbeitenden Datenmengen zu einer unakzeptablen Blockierung des Empfängers führen würde.

Die digitale Fernsehübertragung ist auch nicht dazu bestimmt, Bild-Daten exklusiv an einzelne Endgeräte zu senden. Die herkömmliche "Conditional Access"-Technik ist lediglich auf den Empfang durch eine Benutzergruppe zugeschnitten, die gerade die zahlenden Fernsehzuschauer umfaßt.

Aus WO 95/29560 ist ein Verfahren zur Übertragung von Daten in Form eines Transportdatenstromes bekannt, der insbesondere einen mit "PREFIX" bezeichneten Datenabschnitt mit Steuersignalen und "Signal Component Identifier"-Daten enthält. Beim Empfang des Transportdatenstroms werden die "Signal Component Identifier"-Daten mit einer Vielzahl von vorprogrammierten Identifizierungsdaten verglichen. Sobald eine Übereinstimmung zwischen den Daten festgestellt wird, wird der Transportdatenstrom vom Empfänger übernommen bzw. andernfalls verworfen.

Die Aufgabe der Erfindung ist es, verbesserte Verfahren zur Datenübertragung anzugeben, mit denen die Beschränkungen herkömmlicher Systeme überwunden werden können und die es ermöglichen, beliebige Datenformate mit erhöhten Datenraten effektiv an vorbestimmte Einzelempfänger oder Empfängergruppen zu versenden. Die Aufgabe der Erfindung ist es auch, Vorrichtungen zur Implementierung derartiger Verfahren anzugeben.

Diese Aufgaben werden durch die Verfahren bzw. Vorrichtungen mit den Merkmalen gemäß den Patentansprüchen 1, 6 bzw. 7 gelöst. Vorteilhafte Ausführungsformen der Erfindung ergeben sich aus den abhängigen Ansprüchen.

Die Erfindung basiert auf der Idee, eine neue Daten-Container-Gestaltung zu schaffen, die es einerseits erlaubt, eine Datenübertragung mit digitalen Signalen an vorbestimmte Geräte vorzunehmen und die andererseits eine wesentliche Verminderung von Verarbeitungszeiten und des Schaltungsaufwands im Empfänger und somit eine Erhöhung der übertragbaren Datenraten ermöglicht. Das erfindungsgemäße Verfahren zum Aufbau eines Datenstroms bildet die Daten-Container derart, daß jeder Container eine Identifizierungsinformation enthält, die dazu eingerichtet ist, den Container zum Empfang mindestens einem Endgerät eindeutig zuzuordnen. Gemäß einer bevorzugten Ausführungsform enthält diese Identifizierungsinformation zwei Teilkomponenten. Die erste Teilkomponente (Auswertungsanweisung) enthält eine Information dahingehend, ob und wie die zweite Teilkomponente (Empfängeridentifizierung) ausgewertet werden soll. Die erste bzw. zweite Teilkomponente wird durch sogenannte Minor- bzw. Major-Header gebildet, die im ersten Datenpaket eines Containers enthalten sind. Beim Aufbau des Containers durch eine Vielzahl von Minor-Frames wird das erste Datenpaket durch den ersten Minor-Frame gebildet. Die Minor- bzw. Major-Header sind am Anfang oder auch an einer beliebigen anderen Stelle innerhalb des ersten Minor-Frames angeordnet. Im übrigen ist der erste Minor-Frame gegebenenfalls mit weiteren Spezifizierungs-Informationen und Nutzdaten gefüllt. Die übrigen Minor-Frames enthalten jeweils Minor-Header und im übrigen Nutzdaten. Diese Container-Gestalt ermöglicht ein erfindungsgemäßes Datenempfangsverfahren derart, daß nach Empfang der Identifizierungsinformation (oder Header-Information) ein Vergleich mit der Empfängeridentität durchgeführt und bei positivem Ergebnis der Daten-Container übernommen wird.

Erfindungsgemäße Vorrichtungen sind zur Implementierung dieser Verfahren entsprechend in der Sendeeinrichtung (Schalt- und Codiermittel zum Aufbau des Containerstroms) und in der Empfangseinrichtung vorgesehen. Die Sendeeinrichtung enthält erfindungsgemäß Mittel zur Codierung der Identifizierungsinformation und zur Verbindung mit den Nutzdaten. Die Empfängereinrichtung enthält insbesondere Vergleichermittel, die zur schnellen Verarbeitung der Identifizierungsinformation eingerichtet sind. Die Identifizierungsinformation wird dann genügend schnell verarbeitet, wenn das Lesen und die Auswertung der Identifizierungsinformation im ersten Minor-Frame der Daten-Container wesentlich schneller als der nachfolgende serielle Empfang der Nutzdaten erfolgt. In diesem Fall kann im Ergebnis der Auswertung der Identifizierungsinformation ein Übernahmesignal bereitgestellt werden, das den Empfang der Nutzdaten jeweils freigibt oder unterbindet. Zu diesem Zweck sind die Vergleichermittel vorzugsweise als Doppelpufferanordnungen ausgeführt, bei denen der erste Minor-Frame nach Empfang in einen Pufferspeicher übernommen und von diesem in Bezug auf die Identifizierungsinformation mit einer Soll-Information verglichen wird. Dieser Vergleich kann so schnell erfolgen, daß die serielle Aufnahme des oder der nachfolgenden Minor-Frames freigegeben oder unterbrochen werden kann.

Die Erfindung wird vorzugsweise in einem Datenübertragungssystem verwendet, bei dem von einem Datenanbieter (Provider) über eine Satellitenstrecke Daten abgestrahlt und empfängerspezifisch empfangen werden. Entsprechend einer bevorzugten Ausführungsform ist eine erfindungsgemäße Vorrichtung empfängerseitig durch ein Kartenmodul in einem Personalcomputer mit PCI-Bussystem realisiert. Die Realisierung der Erfindung ist jedoch nicht auf einen PC mit PCI-Bussystem beschränkt, sondern in allen Datenverarbeitungsanlagen möglich, die mit einem Hochgeschwindigkeitsbussystem ausgerüstet sind, das den Anforderungen einer genügend schnellen Datenübernahme genügt.

Ausführungsformen der Erfindung werden im folgenden unter Bezug auf die beigefügten Zeichnungen beschrieben. Es zeigen:
- Fig. 1:: eine Blockdarstellung zur Illustration einer bevorzugten Anwendung der Erfindung;
- Fig. 2:: eine Blockdarstellung eines Empfängersystems, das mit einer erfindungsgemäßen Vorrichtung ausgestattet ist;
- Fig. 3:: eine Illustration zur erfindungsgemäßen Gestaltung von Daten-Containern;
- Fig. 4 :: eine Blockdarstellung von Vergleichermitteln;
- Fig. 5:: eine Blockdarstellung eines herkömmlichen Empfangssystems gemäß der DVB-Technik; und
- Fig. 6:: eine Darstellung der herkömmlichen Gestaltung von Daten-Containern in der DVB-Technik.

Im folgenden werden Ausführungsbeispiele der Erfindung unter Bezugnahme auf die Datenübertragung über eine Satellitenstrecke erläutert. Es ist dem Fachmann jedoch ersichtlich, daß die Erfindung auch bei anderen Übertragungskanälen (z.B. Kabelnetz) implementierbar ist. Ferner ist die Erfindung nicht auf die erläuterte Datenübertragung in einer Richtung beschränkt, sondern kann auch bei Übertragungen in Hin- und Rückrichtung angewendet werden.

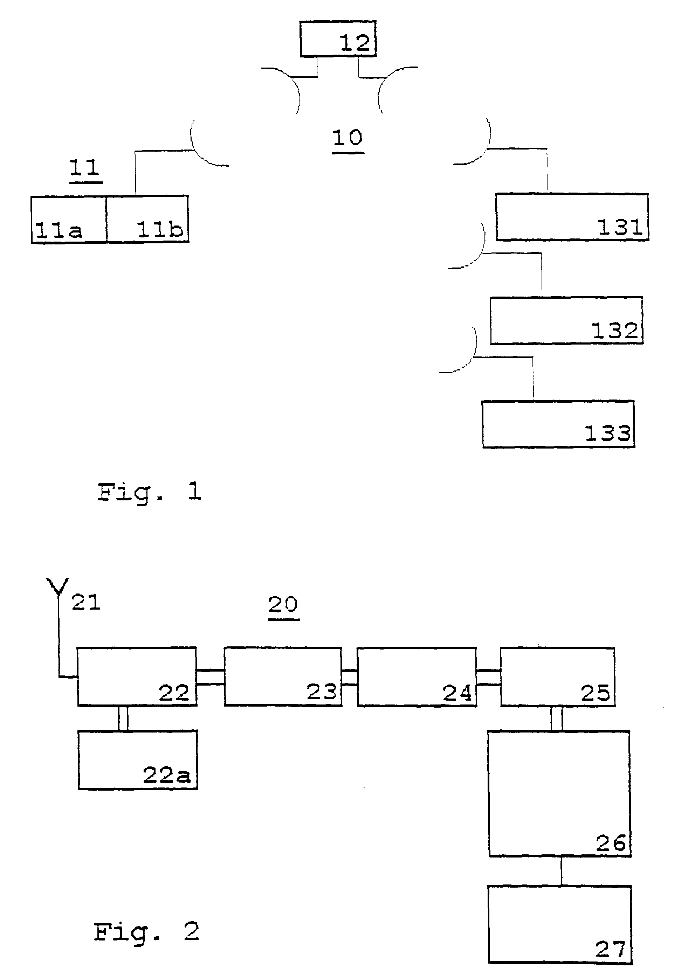

Figur 1 zeigt ein Beispiel einer Satellitenübertragungsstrecke 10 von einem Sender 11 (Server) über einen Satellitentransponder 12 zu einer Vielzahl von Empfängern 131, 132, 133, ... . Der Sender 11 ist dazu vorgesehen, Daten an den Transponder 12 zu senden, die von einer Datenquelle 11a über eine serielle Schnittstelle an einen sogenannten Paketizer 11b geliefert worden sind. Der Paketizer 11b erzeugt einen normgerechten Datenstrom, der die quellen- und kanalcodierten Daten entsprechend der erfindungsgemäßen Container-Gestaltung enthält. Die Frame-Größe, die Kanal-Codierung (insbesondere Fehlerkorrektur) und die Modulation sind vorzugsweise an den Übertragungsstandard ETS 300 421 angepaßt. Das Senden der Daten kann beispielsweise unter Einsatz der QPSK-Modulation erfolgen. Die Empfänger 131, 132, 133.... sind jeweils mit einer handelsüblichen Satellitenempfangsantenne mit einem LNB ("Low Noise Block") versehen, der die erste Zwischenfrequenz bereitstellt. Der gewählte Antennendurchmesser ist jeweils an die örtlichen Empfangsbedingungen angepaßt. Der empfangene Frequenzbereich kann beispielsweise im Bereich 10,7 bis 12,75 GHz liegen, wobei die erste Zwischenfrequenz rd. 950 bis 2150 MHz beträgt. Bei der Darstellung in Fig. 1 ist jeder Empfänger mit einer Satellitenantenne dargestellt. Es ist jedoch alternativ möglich, eine Vielzahl von Empfängern mit einer gemeinsamen Gruppenantenne zu betreiben.

Die Server-Karte (oder Datenquelle 11a) im Sender 11 besitzt die Aufgabe, die zu übertragenden Daten seriell dem Paketizer 11b zuzuführen. Das Interface kann beispielsweise eine RS422-Schnittstelle oder eine vergleichbare Schnittstelle sein. Die Daten werden von geeigneten Speicher- und Schaltmitteln auf Minor-Frame-Ebene entsprechend dem gewählten Daten-Container-Format zusammengestellt und gegebenenfalls mit einer Taktinformation an den Paketizer 11b übergeben.

Der Aufbau eines Empfängers ist beispielhaft in Fig. 2 dargestellt. Der Empfänger 20 umfaßt die Empfangsantenne 21 (mit LNB), einen Tuner 22, einen ZF-Verstärker 23, einen Demodulator 24 und eine Decodiereinheit 25, an deren Ausgang ein Rohdatenstrom bestehend aus Daten-Containern (s. unten) bereitgestellt wird. Die Decodiereinheit 25 enthält im einzelnen insbesondere einen Viterbi-Decoder, einen Faltungs-Deinterleaver und einen Reed-Solomon-Decodierer. Ferner kann eine Einheit zur Entfernung der Energieverwischung vorgesehen sein.

Für die Daten-Decodierung werden entsprechend dem gewählten Übertragungsstandard die folgenden Parameter bevorzugt:
- Viterbi-Decodierung nach K=7, G₁=171ₒₖₜ, G₂=133ₒₖₜ,
- Viterbi-Decoderraten 1/2, 2/3, 5/6, 7/8,
- Synchronisation und Deinterleaving und
- Reed-Solomon-Decoder mit N=204, K=188, t=8.

Bei direktem Anschluß eines LNB (z. B. Universal-LNB) an eine PC-Karte ist ferner eine Steuereinheit 22a vorgesehen, die zur Bereitstellung eines Steuersignals zur Umschaltung der Eingangsfrequenz des LNB eingerichtet ist. Die Steuereinheit 22a bildet ein Kanalwahlmittel. Dies hat die Funktion, auf ein Steuersignal des Senders oder des Empfängers einen Kanalwechsel durch Änderung der Empfangsfrequenz durchzuführen. Das entsprechende Steuersignal tritt immer dann auf, wenn die Gesamtmenge der zu übertragenden Daten die Übertragungskapazität des zunächst benutzten Kanal überschreiten, so daß auf einen weiteren Kanal ausgewichen werden muß.

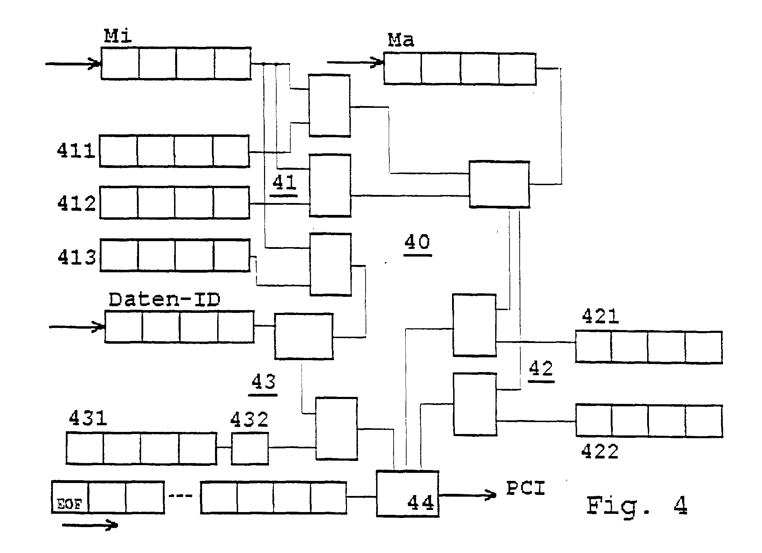

Die von der Decodiereinheit 25 bereitgestellten Daten werden an eine Identifizierungseinheit 26 geliefert, die zur Erkennung von Daten-Frames in den Daten-Containern eingerichtet ist. Die Identifizierungseinheit 26 enthält insbesondere Vergleichermittel, die weiter unten unter Bezug auf Fig. 4 im einzelnen erläutert werden. Die Identifizierungseinheit 26 ist über eine Übernahmeeinheit 27 (PCI-Interface) mit einem PCI-Bus eines PC-Bussystems verbunden.

Im Unterschied zum oben unter Bezug auf Fig. 5 erläuterten DVB-Fernsehempfänger werden die Rohdaten (Daten-Container) ohne ein Demultiplex-Verfahren oder eine MPEG-Decodierung unmittelbar auf die gewünschte Spezifizierung geprüft. Erst wenn die Daten entsprechend einem der unten erläuterten Übernahme- oder Zugriffsmodi von der Identifizierungseinheit 26 durchgelassen worden sind, werden sie auf der PC-Software-Ebene weiterverarbeitet. Diese weitere Verarbeitung umfaßt insbesondere eine Überprüfung der Übertragungsdaten auf Vollständigkeit und Richtigkeit sowie das Zusammenfügen von Teildaten, die auf verschiedene Daten-Container verteilt sind.

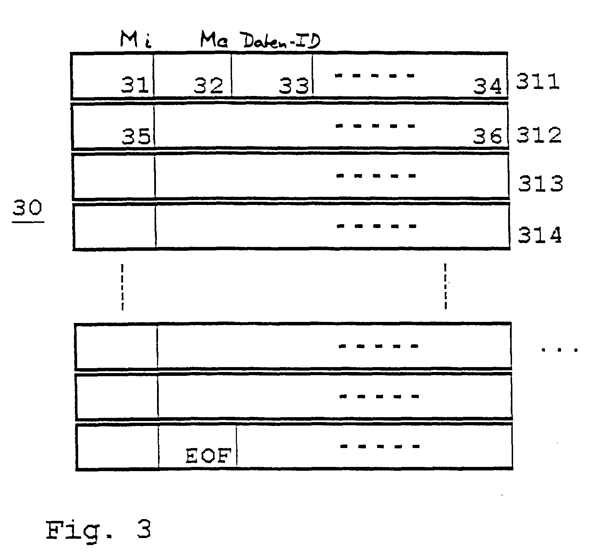

Jeder Daten-Container besitzt einen Frame-Aufbau, der im folgenden unter Bezug auf Fig. 3 erläutert wird.

Der Rohdatenstrom als sogenannter "Transport Stream", bestehend aus einer Vielzahl von "PES"-Paketen (PES: "Packetized Elementary Stream"), aufgebaut. Jedes PES-Paket bildet einen sogenannten Major-Frame 30, der bis zu 512 Minor-Frames enthalten kann, die in Fig. 3 mit den Bezugszeichen 311, 312, 313,... bezeichnet sind. Jeder Minor- Frame besitzt eine Länge von 188 Byte. Im ersten Minor-Frames 311 ist erfindungsgemäß eine Header-Kombination zur Identifizierung vorgesehen (siehe unten). Das Ende des letzten Minor-Frames wird durch eine "EOF-ID" ("End of Frame") angezeigt.

Die Header-Kombination umfaßt einen Minor-Header 31 (Mi), einen Major-Header 32 (Ma) und eine Daten-ID 33. Jede der Komponenten besitzt eine Länge von 4 Byte. Der Daten-ID 33 schließen sich Nutzdaten 34 an. Es ist nicht zwingend, daß die Minor- bzw. Major-Header 30, 32 und die Daten-ID 33 am Beginn des ersten Minor-Frames angeordnet sind. Es ist lediglich wichtig, daß diese Identifizierungsinformationen überhaupt in dem ersten Minor-Frame oder einer ersten Dateneinheit enthalten sind, die jeweils als ein Wort mit der oben genannten Doppelpuffertechnik zwischengespeichert werden kann. Der nächste Minor-Frame 312 wird durch einen Sub-Header 35 angeführt, der den Beginn des neuen Minor-Frames anzeigt und dem sich weitere Nutzdaten 36 anschließen. Neben der Anzeige des Beginns eines neuen Minor-Frames kann ein Sub-Header 35 auch eine Information zur Identifikation der folgenden Nutzdaten enthalten. Die Länge der Sub-Header beträgt vorzugsweise jeweils 1 Byte.

Der Minor-Header 31 und der Major-Header 32 im ersten Minor-Frame 311 wirken wie folgt zusammen. Der Minor-Header 31 enthält eine Information, wie der Major-Header 32 auszuwerten ist. Dies erlaubt die mehrstufige Durchführung eines erfindungsgemäßen Identifizierungsvorgangs, was sich vorteilhaft auf die Datenverarbeitungsgeschwindigkeit und somit auf die Übertragungskapazität auswirkt. Im folgenden werden beispielhaft verschiedene Zugriffsmodi, für die ein erfindungsgemäßer Empfänger eingerichtet ist, und das entsprechende Zusammenwirken der Minor- und Major-Header 31, 32 erläutert.

### Erster Zugriffsmodus: Übertragung an Einzelempfänger

In diesem Modus sollen Daten vom Sender 11 (s. Fig. 1) ausschließlich an den Empfänger 131 übermittelt werden. In diesem Fall enthält der Minor-Header den Befehl, den folgenden Major-Header in Bezug auf eine empfängerspezifische Identifizierung auszuwerten. Diese Identifizierung kann beispielsweise durch eine Seriennummer gegeben sein, die jedem gebauten Empfangsmodul eineindeutig zugeordnet ist (Moduladresse). In diesem Fall sollen die im Container enthaltenen Daten nur übernommen werden, falls die im Major-Header angegebene Adresse mit der Moduladresse übereinstimmt.

### Zweiter Übertragungsmodus: Übertragung an Gruppenempfänger

In diesem Modus werden Daten an ganze Benutzergruppen, die jeweils eine bestimmte Anzahl von Einzelempfängern umfassen, gesendet. Der Minor-Header enthält den Befehl, den Major-Header hinsichtlich einer Gruppen-Identifizierung auszuwerten. Da als Moduladresse lediglich eineindeutige Seriennummern vergeben sind, muß die Gruppen-Identifizierung gesondert definiert sein. Dazu sind in einem erfindungsgemäßen Empfänger Speichermittel zur Speicherung einer Gruppenadresse ("Group-Code") vorgesehen (s. unten). Die Gruppenadresse kann frei wählbar sein. Bei der Datenübertragung an Benutzergruppen wird der Daten-Container von allen Empfängern gelesen, die mit der entsprechenden Group-Code-Nummer programmiert sind.

### Dritter Übertragungsmodus: Datenübertragung an alle Empfänger

In diesem Modus sollen keinerlei Zugriffsbeschränkungen bestehen, d.h. die vom Sender ausgehenden Daten werden in alle verfügbaren Empfänger eingelesen. In diesem Fall enthält der Minor-Header lediglich den Befehl, keinerlei Information dem folgenden Major-Header auszuwerten, sondern ohne jeden Vergleichsschritt die Daten-Container unmittelbar zur weiteren Verarbeitung zu übernehmen.

### Vierter Übertragungsmodus: Datenübernahme von benutzerdefinierten Daten

Falls ein Interesse des Empfängers besteht, eine Auswahl unter den für ihn zugelassenen Daten zu treffen, so kann dies beim vierten Übertragungsmodus dadurch berücksichtigt werden, daß im Minor-Header der Befehl steht, die nächstfolgenden Daten--ID-Informationen auszuwerten. Diese Auswertung umfaßt einen Vergleich der Daten-ID-Informationen mit einer charakteristischen Informationscodierung, die vom Empfänger frei wählbar ist.

Neben den einzelnen Übertragungsmodi sind auch Mischformen des vierten Übertragungsmodus jeweils mit einem der ersten bis dritten Übertragungsmodi möglich.

Zur Realisierung der Datenübernahme entsprechend einem der erläuterten Übertragungsmodi ist die Identifizierungseinheit 26 (s. Fig. 2) mit Vergleichermitteln versehen, deren Funktionsprinzip im folgenden unter Bezug auf Fig. 4 erläutert wird. In Fig. 4 sind Einzelheiten der oben genannnten Doppelpuffertechnik nicht dargestellt. Die eingelesenen Identifizierungsinformationen (MI, MA, Daten-ID) stehen in Speichermitteln, die jeweils Zwischenspeicher bei der Doppelpuffertechnik sind.

Die Vergleichermittel 40 umfassen eine erste Vergleicherstufe 41 zur Auswertung der Minor-Header-Information und eine zweite Vergleicherstufe 42 zur Auswertung der Major-Header-Information und eine dritte Vergleicherstufe 43 zur Auswertung der Daten-ID-Information. Die erste Vergleicherstufe 41 führt den Vergleich zwischen dem Inhalt des Minor-Headers Mi mit beispielsweise drei Befehlsmöglichkeiten 411-413 durch, die jeweils den ersten, zweiten und vierten Übertragungsmodi entsprechen. Je nach dem Ergebnis wird der Major-Header Ma mit der Leseeinheit 420 gelesen und mit dem Inhalt des Moduladressen-Registers 421 oder des Group-Code-Registers 422 verglichen und/oder die Daten-ID-Information gelesen und mit dem Daten-Inhalt des entsprechenden ID-Speichers 431 (s. unten) verglichen. Die Datenübernahme wird an der Übernahmeeinheit 44 ausgelöst, wenn eines der Signale der Vergleicherstufe 42 und das Signal der Vergleicherstufe 43 die Übernahme freigeben. Diese Signale bilden gemeinsam ein Übernahmesignal.

In Fig. 4 sind die Mittel zur unspezifischen Datenübernahme (dritter Übertragungsmodus) nicht gesondert dargestellt. Sie können beispielsweise einen vierten Vergleicher in der ersten Vergleicherstufe 41 umfassen, der ein Freigabesignal zum Übernahmesignal beiträgt. Die Übernahmeeinheit 44 könnte aber auch die Freigabe direkt vom Minor-Header erhalten.

Bei Übereinstimmung des Major-Headers mit einem der Registerinhalte wird die Datenübernahme ab dem nächstfolgenden Minor--Frame über den PCI-Bus des Empfängers veranlaßt. Die Datenübernahme endet mit Erkennen der EOF-Marke. Falls im Fehlerfall keine EOF-Marke erkannt wird, so wird die Übertragung nach dem 512. Minor-Frame abgebrochen. Die weitere Verarbeitung der Daten erfolgt dann auf PC-Ebene unabhängig vom Empfänger.

Das Moduladressen-Register 421 enhält die modulspezifisch vom Hersteller vorgegebene Seriennummer z.B. der jeweiligen PC-Karte. Das Group-Code-Register 422 enthält eine von einer Empfängergruppe definierte Identifizierungsnummer. Der Daten-ID-Speicher 431 ist ein Speicher mit einer Vielzahl von 1-Bit-Speicherplätzen, von denen jeder einer bestimmten Vorauswahl von Dateninhalten (Datenprofil) entspricht. Die Daten, die dem vom Nutzer gewünschten Datenprofil entsprechen, werden im Daten-ID-Speicher 431 am entsprechenden Speicherplatz mit einer logischen "1" gekennzeichnet. Die im laufenden Datenstrom vorkommenden Daten-ID-Nummern werden mit dem Inhalt des durch die jeweilige Nummer adressierten Daten-ID-Speicherplatzes verglichen. Enthält der Speicherplatz (432, s. Fig. 4) eine logische "1" so soll die Datenübernahme freigegeben werden. Der Daten-ID-Speicher 431 kann beispielsweise ein Speicher mit 32000 Speicherplätzen sein, die mit den möglichen Datenprofilen belegt sind. Die Vorgabe von Daten-ID-Nummern durch den Nutzer (d.h. die Vorgabe der Datenprofile, die vom Nutzer empfangen werden sollen) erfolgt programmgesteuert, indem der Nutzer einer Tabelle mit Programminhalten interessierende Programmgruppen markiert und aufgrund der Markierung automatisch ein Nummernsatz erstellt, der einem Speicherplatz im Daten-ID-Register 431 entspricht. Die hier beschriebene Verfahrensweise zur Codierung einer großen Anzahl von möglichen Datenprofilen durch eine verhältnismäßig kurze Daten-ID-Nummer stellt einen zusätzlichen Vorteil der erfindungsgemäßen Datenübertragung bzw. Bildung von Daten-Containern dar. Die Speicher 411-413, 421, 422 und 431 können jeweils hardwaremäßig getrennte Baugruppen oder Speicherbereiche in einem gemeinsamen Micro-Controller sein.

Die erfindungsgemäße Daten-Container-Gestaltung und der erfindungsgemäße Empfängeraufbau ermöglichen erstmalig, den kompletten Empfänger (das heißt, die Empfangseinheit, die Auswertungslogik und die Mittel zur Ausgabe auf einen Rechner) in Form einer PC-Karte zu implementieren. Dies erlaubt in vorteilhafter Weise die Satellitenübertragung von Daten vom Provider zu definierten Einzel- oder Gruppen- Empfängern zum Beispiel zur Realisierung von Software-Updates, von Produktinformationen (z.B. in Handelsketten) oder von Lerninhalten (sogenanntes Tele-Teaching). Ferner ist das erfindungsgemäße System in vorteilhafter Weise in bestehende Datennetze (z.B. Internet) integrierbar. So kann beispielsweise die Bestellung von Daten drahtgebunden, das Downloading hingegen über Satellit erfolgen, so daß eine erhebliche Netzentlastung und Verringerung von Wartezeiten ermöglicht wird.

Weitere Vorteile der Erfindung bestehen darin, daß eine wesentliche Entlastung des Empfangssystems erfolgt. Im Gegensatz zum herkömmlichen digitalen Fernsehempfang, wo der Empfänger keine andere Aufgabe hat, als Video- und Tondaten zu empfangen und zur Anzeige aufzubereiten, wird beim erfindungsgemäßen Empfangen beliebiger Datenformate mit einem rechnergekoppelten Empfänger der Rechner, d.h. die CPU, nicht dauerhaft durch den Empfang und die Auswertung der Daten in Anspruch genommen. Vielmehr findet mit dem erfindungsgemäßen Aufbau des Datenstroms bzw. des Empfängers eine Vorprüfung der empfangbaren Daten und daraufhin gegebenenfalls die Datenübernahme statt, ohne daß die CPU blockiert wird. Dies stellt eine wichtige Voraussetzung zur massenhaften Anwendung der satellitengestützten Übertragung an Einzel- oder Gruppenempfänger dar. Der Nutzer kann mit seinem Rechner, der an das Empfangsgerät angeschlossen ist, beliebig arbeiten, während im Hintergrund der Datenempfang abgearbeitet wird. Dies bedeutet beispielsweise auch, daß zum Mail-Empfang durch Nutzer, die nicht ständig an einem Standnetz angeschlossen sind, der Nutzer sich nicht zeitweilig in ein Netz einwählen muß, um das Vorliegen von empfangenen Mails zu prüfen.

Es ist auch möglich, einen erfindungsgemäßen Empfänger so aufzubauen, daß die in Fig. 2 dargestellten Komponenten dauerhaft in Betrieb sind und die übernommenen Daten in einen Zwischenspeicher ablegen, während der eigentliche Steuer- und Verarbeitungsrechner ausgeschaltet ist.

## Patentansprüche

1. Verfahren zur Datenübertragung von einer Datenquelle (11) zu mindestens einem vorbestimmten Datenempfänger (131, 132, 133, 20), wobei die Daten in Form eines Transportdatenstroms mit Daten-Containern übertragen werden und in jedem Datenempfänger (131, 132, 133, 20) eine Containeridentifizierung jedes Daten-Containers erfaßt wird, um ein Übernahmesignal zu erzeugen, mit dem eine Datenübernahme im Datenempfänger (131, 132, 133, 20) gesteuert wird, wobei jeder Daten-Container eine Vielzahl von Minor-Frames mit Nutzdaten enthält,
**dadurch gekennzeichnet,** daß
im jeweils ersten Minor-Frame eines Daten-Containers die Containeridentifizierung enthalten ist, die mindestens einem Empfänger eindeutig zuordenbar ist oder eine Information zur empfängerspezifischen Datenübernahme umfaßt, wobei jeder erste Minor-Frame einen Minor-Header mit einer Auswertungsanweisung und einen Major-Header mit einer Empfängeridentifizierung enthält, wobei
die Auswertungsanweisung und die Empfängeridentifizierung einem mehrstufigen Vergleich mit gespeicherten Empfängerdaten oder einem empfängerunspezifischen Freigabesignal unterzogen werden, wobei bei einem ersten Vergleichsschritt eine erste Teilkomponente der Containeridentifizierung die Auswertungsanweisung erfaßt wird, um festzulegen, wie bei einem zweiten Vergleichsschritt eine zweite Teilkomponente der Containeridentifizierung die Empfängeridentifizierung ausgewertet wird.

2. Verfahren gemäß Anspruch 1, bei dem das Übernahmesignal den Empfänger zum Datenempfang einrichtet, falls die zweite Teilkomponente mit einer gespeicherten Empfängeridentifizierung übereinstimmt, oder den Datenempfang blockiert, falls die zweite Teilkomponente nicht mit der gespeicherten Empfängeridentifizierung übereinstimmt.

3. Verfahren gemäß Anspruch 2, bei dem die zweite Teilkomponente eine Identifizierungsinformation umfaßt, die einzelempfänger- oder gruppenempfängerspezifisch ist.

4. Verfahren gemäß einem der vorhergehenden Ansprüche, bei dem der Vergleich oder die Erfassung des Freigabesignals einen weiteren Vergleichsschritt umfaßt, bei dem eine vorbestimmte Datenauswahlinformation mit einer Daten-ID-Information in jedem Daten-Container verglichen wird und bei Übereinstimmung das Übernahmesignal den Empfänger zum Datenempfang einrichtet.

5. Verfahren gemäß Anspruch 1, bei dem im ersten Minor-Frame zusätzlich eine Daten-ID-Information angeordnet wird, die zur Identifizierung des Inhalts der Daten eingerichtet ist, die in dem jeweiligen Daten-Container enthalten sind.

6. Sendevorrichtung (11, 12), die zur Übermittlung von digitalen Daten nach einem Verfahren mit den Schritten gemäß einem der Ansprüche 1 bis 5 eingerichtet ist.

7. Empfangsvorrichtung (131, 132, 133, 29), die zum Empfang von Daten eingerichtet ist, die in Form von Daten-Containern nach einem Verfahren mit den Schritten gemäß einem der Ansprüche 1 bis 5 übertragen werden,
**gekennzeichnet durch**
Vergleichermittel zur Erfassung der Containeridentifizierung, die in jedem Daten-Container enthalten ist, und
Übernahmesignalmittel, die mit den Vergleichermitteln zur Bereitstellung eines Übernahmensignals verbunden sind.

8. Vorrichtung gemäß Anspruch 7, bei der die Vergleichermittel mehrstufig aufgebaut sind, wobei eine erste Vergleicherstufe zur Auswertung einer ersten Teilinformation der Containeridentifizierung und zur Ansteuerung einer zweiten Vergleicherstufe zur Auswertung einer zweiten Teilinformation der Containeridentifizierung eingerichtet ist.

## Claims

1. A method of data transmission from a data source (11) to at least one predetermined data receiver (131, 132, 133, 20), wherein the data is transmitted in the form of a data transport stream with data containers and a container identification of each data container is detected in each data receiver (131, 132, 133, 20), in order to generate an acceptance signal, with which data acceptance in the data receiver (131, 132, 133, 20) is controlled, wherein each data container includes a plurality of minor frames with user data, characterized in that the container identification is held in the respective first minor frame of a data container and can be associated unambiguously with at least one receiver or comprises information for receiver-specific data acceptance, wherein each first minor frame includes a minor header with an evaluation instruction and a major header with a receiver identification, wherein the evaluation instruction and the receiver identification are subjected to a multi-stage comparison with stored receiver data or a non receiver-specific enabling signal, wherein a first sub-component of the container identification the evaluation instruction is detected in a first comparison step in order to determine how a second sub-component of the container identification, the receiver identification is evaluated.

2. A method according to claim 1, in which the acceptance signal sets up the receiver for data reception in the case in which the second sub-component matches a stored receiver identification, or the data reception is blocked in the case in which the second sub-component does not match the stored receiver identification.

3. A method according to claim 2, in which the second sub-component comprises identification information which is specific to an individual receiver or a group of receivers.

4. A method according to any of the preceding claims, in which the comparison or derivation of the enabling signal comprises a further comparison step, in which predetermined data selection information is compared with data ID information in each data container and in the case of agreement the acceptance signal sets up receiver up for data reception.

5. A method according to claim 1, in which data ID information is additionally arranged in the first minor frame and is adapted to identify the content of the data which is contained in the respective data container.

6. Transmission apparatus (11, 12) which is arranged to transmit digital data in accordance with a method with the steps according to any of claims I to 5.

7. Receiving apparatus (131, 132, 133, 29) which is arranged to receive data which is transmitted in the form of data containers in accordance with a method with the steps according to any of claims 1 to 5, characterized by comparison means for detecting the container identification which is contained in each data container and acceptance signal means which are connected to the comparison means for providing an acceptance signal.

8. Apparatus according to claim 7, in which the comparison means are of multi-stage structure, wherein a first comparison stage is arranged to evaluate first sub-information of the container identification and to control a second comparison stage for evaluating second sub-information of the container identification.

## Revendications

1. Procédé de transmission de données depuis une source de données (11) jusqu'à au moins un récepteur de données prédéterminé (131, 132, 133, 20), les données étant transmises sous la forme d'un flux de données de transport avec des conteneurs de données et une identification de conteneur de chaque conteneur de données étant détectée dans chaque récepteur de données (131, 132, 133, 20) afin de générer un signal d'acceptation qui commande une acceptation de données dans le récepteur de données (131, 132, 133, 20), chaque conteneur de données contenant une pluralité de trames mineures avec des données utiles, caractérisé en ce que respectivement la première trame mineure d'un conteneur de données contient l'identification de conteneur qui peut être affectée de façon unique à au moins un récepteur ou qui comprend une information pour une acceptation de données spécifique au récepteur, chaque première trame mineure contenant un en-tête mineur avec une instruction d'évaluation et un en-tête majeur avec une identification de récepteur, l'instruction d'évaluation et l'identification de récepteur étant soumises à une comparaison en plusieurs étapes avec des données de récepteur mémorisées ou à un signal de déblocage non spécifique au récepteur, dans une première étape de comparaison d'une première composante partielle de l'identification de conteneur, l'instruction d'évaluation étant détectée afin de déterminer comment sera évaluée l'identification de récepteur dans une deuxième étape de comparaison d'une deuxième composante partielle de l'identification de conteneur.

2. Procédé selon la revendication 1, dans lequel le signal d'acceptation prépare le récepteur à la réception des données, au cas où la deuxième composante partielle coïnciderait avec une identification de récepteur mémorisée, ou bloque la réception des données au cas où la deuxième composante partielle ne coïnciderait pas avec l'identification de récepteur mémorisée.

3. Procédé selon la revendication 2, dans lequel la deuxième composante partielle comprend une information d'identification qui est spécifique à un récepteur individuel ou à un groupe de récepteurs.

4. Procédé selon l'une quelconque des revendications précédentes, dans lequel la comparaison ou la détection du signal de déblocage comprend une étape de comparaison supplémentaire dans laquelle une information de sélection de données prédéterminée est comparée avec une information d'identification de données dans chaque conteneur de données et, en cas de coïncidence, le signal d'acceptation prépare le récepteur à la réception des données.

5. Procédé selon la revendication 1, dans lequel une information d'identification de données est en outre disposée dans la première trame mineure, laquelle information est préparée pour identifier le contenu des données contenues dans le conteneur de données respectif.

6. Dispositif d'émission (11, 12), préparé pour transmettre des données numériques selon un procédé comprenant les étapes selon l'une quelconque des revendications 1 à 5.

7. Dispositif de réception (131, 132, 133, 29), préparé pour recevoir des données qui sont transmises sous la forme de conteneurs de données selon un procédé comprenant les étapes selon l'une quelconque des revendications 1 à 5, caractérisé par des moyens de comparateur pour détecter l'identification de conteneur contenue dans chaque conteneur de données et des moyens de signal d'acceptation reliés aux moyens de comparateur pour fournir un signal d'acceptation.

8. Dispositif selon la,revendication 7, dans lequel les moyens de comparateur sont réalisés sur plusieurs étages, un premier étage de comparateur étant préparé pour évaluer une première information partielle de l'identification du conteneur et pour commander un deuxième étage de comparateur pour évaluer une deuxième information partielle de l'identification de conteneur.
